# EUROPEAN PATENT APPLICATION

(11) **EP 4 836 370 A1**
(43) Date of publication of application: **04.11.2026**
(21) Application number: 25172930.7
(22) Date of filing: 28.04.2025
(51) Int. Cl.: H04L 45/302, H04L 9/40, H04W 4/14, H04W 8/12, H04W 8/18, H04W 8/20, H04W 8/26, H04W 12/037, H04W 12/041, H04W 12/06, H04W 12/106, H04W 36/00, H04W 36/12, H04W 60/04

(54) **METHOD FOR TRANSMITTING NON-ACCESS STRATUM MESSAGES BETWEEN A USER EQUIPMENT AND A MOBILE COMMUNICATION NETWORK, SYSTEM OR MOBILE COMMUNICATION NETWORK, USER EQUIPMENT, PROGRAM AND COMPUTER-READABLE MEDIUM**

(71) Applicant: Deutsche Telekom AG, 53113 Bonn (DE)
(72) Inventor: COLOM IKUNO, Josep, 2100 Korneuburg (AT)
(74) Representative: Schwöbel, Thilo K.

(57) **Abstract**

The invention relates to a method for transmitting non-access stratum messages between a user equipment and a mobile communication network, wherein the mobile communication network comprises at least one access network node or entity of an access network and a plurality of core network nodes or entities of a core network, wherein the communication between the user equipment and the plurality of core network nodes or entities involves the access network node or entity regarding the transmission of non-access stratum messages
-- in uplink direction from the user equipment to the plurality of core network nodes or entities as well as
-- in downlink direction from the plurality of core network nodes or entities to the user equipment,
wherein the method comprises the following steps:
-- in a first step, regarding non-access stratum messages between the user equipment and a specific core network node or entity of the plurality of core network nodes or entities, an assignment to a specific non-access stratum route identifier information is performed,
-- in a second step, the non-access stratum messages between the user equipment and the specific core network node or entity are processed using the specific non-access stratum route identifier information.

## Description

### BACKGROUND

The present invention relates to a method for transmitting non-access stratum messages between a user equipment and a mobile communication network, wherein the mobile communication network comprises at least one access network node or entity of an access network and a plurality of core network nodes or entities of a core network.

Additionally, the present invention relates to a system or mobile communication network for transmitting non-access stratum messages between a user equipment and the mobile communication network, wherein the mobile communication network comprises at least one access network node or entity of an access network and a plurality of core network nodes or entities of a core network.

Furthermore, the present invention relates to a user equipment for transmitting non-access stratum messages between the user equipment and a mobile communication network.

Furthermore, the present invention relates to a program and to a computer-readable medium for using a user equipment with a mobile communication network for transmitting non-access stratum messages between the user equipment and the mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G and/or further mobile communication generations of radio access technologies (referring to the different generations of radio access technologies) and typically comprise (or consist of) cells (or radio cells) of one or a plurality of the respective radio access technology/radio access technologies, such radio cells typically being served by base station entities such as gNodeBs or eNodeBs. Typically, such a mobile communication network comprises an access network (comprising the base station entities) as well as a core network that typically comprises network nodes that realize a plurality of network functions or services.

In cellular mobile networks according to different generations of radio access technologies (e.g. in all of GSM (2G), UMTS (3G), LTE (4G), 5G and 6G), an air interface typically exists between a user equipment and its serving base station entity, and this air interface typically comprises at least a control plane and a user plane. Data or traffic - especially control data or traffic - that needs to be exchanged between the user equipment and the (or its) serving base station entity is also called access stratum (AS) traffic, i.e. relating to traffic that is typically terminated at the user equipment and at the base station entity, respectively. In addition to access stratum (AS) communication, non-access stratum (NAS) communication typically refers to data or traffic - especially control data or traffic - that is exchanged between the user equipment and the core network (i.e. typically specific network functions or services of the core network), i.e. relating to traffic that is typically terminated at the user equipment on the one hand, and at the core network (or network function or service thereof) on the other hand.
Of course - due to the air interface -, also non-access stratum communication needs to be transported, or (rather transparently) forwarded, by the base station entity (to the user equipment regarding non-access stratum communication in downlink direction, i.e. originating from the core network, or, alternatively, to the core network regarding non-access stratum communication in uplink direction, i.e. originating from the user equipment). However, such non-access stratum communication is typically encrypted (at least the most important part thereof) between the user equipment and the (respective network function(s) or service(s) of the) core network such that its content is - at least in general - not visible to the base station entity.

In conventionally known mobile communication networks, non-access stratum messages, NAS messages, are transported between the user equipment and the core network by means of using an aggregated (or non-modular) NAS paradigm; this means that one of the network functions or services of the core network (typically the network function or service called access and mobility management function) terminates NAS security (non-access stratum security) and is used as a single entry point for non-access stratum messages directed towards other network functions or services of the core network, such as e.g. the session management function SMF.
Regarding the required functionality at the level of the base station entity/gNB/access network node or entity, how to route NAS packets is simple due to the fact that there is a 1:1 relationship between a user equipment-RRC channel and a user equipment-core network channel, which is sent via a gNB-AMF channel (i.e. a channel between the respective base station entity/gNB/access network node or entity and the respective core network node or entity, especially an access and mobility management function, AMF). Hence, in the aggregated (or non-modular) NAS paradigm, a 1:1 relation regarding uplink control plane messages (NAS messages that the gNB receives from the user equipment) is realized: from the user equipment such messages are always sent to a specific access network node or entity (typically an AMF) via a specific SCTP association. And, likewise, a 1:1 relation regarding downlink control plane messages (NAS messages that the gNB receives from the specific access network node or entity (typically an AMF) including a given AMF-UE NGAP ID) is realized: for the user equipment, such messages can only come from the specific AMF via a specific SCTP association.

Using a modular approach or paradigm to NAS messages, the situation is different: There is a 1:N relation in uplink direction, i.e. control plane messages from the user equipment need to be routed to different core network nodes or entities/NFs (network functions or services) via different paths/channels/routes (e.g. todifferent IPs, via different HTTP connections/streams); and in downlink direction, there is a N:1 relation, i.e. control plane messages for the user equipment can now come from multiple core network nodes or entities/NFs via different paths/channels/routes (e.g. from different IPs, via different HTTP connections/streams).

While concepts of a modular approach to NAS (also called disaggregated NAS) are known at high level (i.e. where a user equipment can have direct, encrypted NAS communication to several, different core network entities in a mobile network), many challenges of an actual implementation thereof remain, especially how, precisely, a base station entity or gNB or access network node or entity should be able to route NAS messages in an efficient manner is not known, as a complete redesign of the current paradigms used in 5G is not realistically conceivable, and, furthermore, as any such solution should avoid to unnecessarily introduce complexity and/or reduce efficiency, especially over the air interface. Hence, this results in the situation that such a modular NAS concept cannot be practically and efficiently realized.

### SUMMARY

An object of the present invention is to provide a technically simple, effective, cost-effective, solution for transmitting non-access stratum messages between a user equipment and a mobile communication network, especially in a manner such that the level of privacy is enhanced (e.g. by means of avoiding to use, in non-access stratum messages, unencrypted identifier information that is visible to the access network nodes), or that the access network has no topology information regarding the internal structure of the core network. A further object of the present invention is to provide a corresponding system or mobile communication network, a corresponding user equipment and a corresponding program and computer-readable medium.

The object of the present invention is achieved by a method for transmitting non-access stratum messages between a user equipment and a mobile communication network, wherein the mobile communication network comprises at least one access network node or entity of an access network and a plurality of core network nodes or entities of a core network, wherein the communication between the user equipment and the plurality of core network nodes or entities involves the access network node or entity regarding the transmission of non-access stratum messages
-- in uplink direction from the user equipment to the plurality of core network nodes or entities as well as
-- in downlink direction from the plurality of core network nodes or entities to the user equipment,
wherein the method comprises the following steps:
-- in a first step, regarding non-access stratum messages between the user equipment and a specific core network node or entity of the plurality of core network nodes or entities, an assignment to a specific non-access stratum route identifier information is performed,
-- in a second step, the non-access stratum messages between the user equipment and the specific core network node or entity are processed using the specific non-access stratum route identifier information.

It is thereby advantageously possible according to the present invention to provide for a modular (or disaggregated) implementation of the non-access stratum functionality in a manner such as to know how precisely a base station entity or gNB or access network node or entity should route NAS messages in an efficient manner - and this without requiring a complete redesign of the current NAS paradigm used in 5G, and also without unnecessarily introduce complexity and/or reduce efficiency, especially over the air interface, and where nevertheless, in such a modular NAS paradigm, a user equipment is provided with the possibility of having (or establishing) a direct, encrypted non-access stratum communication to several, different core network entities in a mobile communication network.
Additionally, the following restrictions or properties of the non-access stratum communication are to be taken into consideration in view of a modular (or disaggregated) implementation of the non-access stratum functionality that realizes an efficient solution to these problems:
-- NAS communication is a very complex protocol, with thousands of already-defined information elements (IEs); a complete redesign of the NAS protocol would, thus, not be efficient;
-- NAS communication is not IP-based;
-- NAS messages are sent via the RRC layer (i.e. the protocol stack between a user equipment and a base station entity/gNB/access network node or entity);
-- the user equipment identifier used at the RRC layer is associated with the user equipment but for privacy reasons it is not the user equipment's permanent identifier (SUPI, subscriber permanent identifier);
-- similarly, at the NG/N2 interface (i.e. between the access network node or entity/radio access network and the core network), network-generated user equipment-associated identifiers (different than the SUPI) are used;
-- NAS messages are encrypted and the base station entity/gNB/access network node or entity cannot read their payload; a minimal portion of a NAS message, containing meta-information such as the message sequence number, is visible to the gNB/access network node or entity;
-- the purpose of an encrypted NAS message is not visible to the gNB/access network node or entity (encrypted messages all use an EPD (extended protocol discriminator) for "5GS mobility management messages" (0x7E);
-- modular NAS requires that a gNB/access network node or entity is capable to route NAS messages to/from core network network functions or services (NFs) with minimum information;
-- any solution should be agnostic to the protocol stack being used between gNB/access network node or entity and the core network, especially in the sense that it should be applicable to both SCTP-based, QUIC-based and SBI-based (HTTP-based) protocol stacks;
-- the core network should be kept in control of the core network entities serving the user equipment, i.e. the core network entities the user equipment communicates with;
-- for security reasons, the network topology of the core network, especially IP/network addressing information should not be visible to the user equipment.
In addition thereto, any solution should be efficient and, as much as possible, future-proof.

According to the present invention, a solutions is proposed that advantageously fulfills these mentioned conditions: It is proposed to use - regarding a (specific) non-access stratum message (or, rather, a plurality (of specific ones) thereof), namely between the user equipment (i.e. a specific user equipment) and a specific core network node or entity - a specific non-access stratum route identifier information, also called specific non-access stratum routing identifier information. Thus, the non-access stratum route identifier information identifies (i.e. is specific - at least regarding a time interval or regarding a communication context such as an established connection - for) the route (of non-access stratum messages) between the considered pair of endpoints, i.e. typically (in uplink direction) from the user equipment (i.e. a specific user equipment) towards a core network node or entity (i.e. a specific core network node or entity), or (in downlink direction) from a core network node or entity (i.e. a specific core network node or entity) towards the user equipment (i.e. a specific user equipment).
Thus, according to the method of the present invention, in a first step, regarding non-access stratum messages between the user equipment and a specific core network node or entity of the plurality of core network nodes or entities, an assignment to a specific non-access stratum route identifier information is performed - preferably, according to the present invention, by a network node of the core network. Furthermore, in a second step, the non-access stratum messages between the user equipment and the specific core network node or entity are processed - especially by the respective access network node or entity/gNB/base station entity involved that is typically serving the user equipment - using the specific non-access stratum route identifier information.

By means of using the proposed non-access stratum route identifier information (hereinafter also called NAS route ID), it is advantageously possible, according to the present invention, to realize an orthogonal layer (especially for routing purposes) to the conventionally known identifier space, and thereby enhance the level of privacy for users of the mobile communication network.

Especially according to the present invention and by means of using the non-access stratum route identifier information, or non-access stratum routing layer, it is advantageously possible to provide enhancements to the non-access stratum layer to allow for at least a 1:N message routing (but even for a N:N message routing if multiple user-associated identifiers were to exist at RRC layer, or if different NAS messages could be routed via several Uu channels, e.g. by a novel RRC layer), e.g. in the sense of a multitude of routes (and, also, of corresponding security contexts) being established between one user equipment on the one hand, and a plurality of core network nodes or entities on the other hand, thus 1:N.
The possibility to realize 1:N message routing according to the present invention, i.e. by means of using the non-access stratum route identifier information, advantageously also allows to comparatively easily implement the non-access stratum functionality according to a modular (or disaggregated) paradigm - especially without the requirement to fundamentally redesign the NAS protocol and its (thousands of) already-defined information elements.

The possibility, according to the present invention, to allow for an assignment of a specific non-access stratum route identifier information to a specific flow of (uplink and/or downlink) NAS messages (or, rather, to a specific pair of communication endpoints, i.e. a specific user equipment and a specific one of access network nodes or entities/NFs in the core network) by a network node of the core network (in contrast to an assignment by an access network node or entity) advantageously provides the possibility to hide the core network communication endpoints from the access network and, also keeps access network-functionality rather simple.
In addition thereto, it is especially preferred according to the present invention that also selection (and discovery) - of the core network communication endpoint of a pair of communication endpoints - is performed by the core network. Thereby, it is advantageously possible that the identity and purpose of the NAS network function or service serving that specific communication - i.e. the specific flow of uplink and/or downlink NAS messages - (as well as involved identifiers such as, e.g., an unencrypted TMSI in NAS messages) is not known to the access network (and neither the endpoint information of the respective core network node or entity known to the user equipment). Furthermore, since the request is NAS-encrypted and no specific information need to be sent to the access network, it is possible to keep access network functionality rather simple.
Hence, the method according to the present invention is advantageously possible to be designed in a privacy-keeping manner, using - by means of the non-access stratum route identifier information - an orthogonal layer to the conventionally used identifier space. Hence, the solution proposed does not require that TMSIs (or equivalent identifiers) are exposed to the radio access network (and neither that communication endpoint information regarding the involved core network nodes or entities need to be exposed to the user equipment); doing so would represent a security degradation of the system - thus, these entities (both the user equipment and the gNB/access network node or entity involved) do not need to be aware (via whatever identifier information) of the precise instances serving a considered user equipment.

Thus, according to the present invention, it is advantageously possible to provide for an application-agnostic routing of NAS messages by means of identifier association (or assignment, i.e. of the non-access stratum route identifier information), wherein the endpoint information (i.e. regarding a pair of communication endpoints) is sent to the respective network access network node or entity involved, and how exactly a primary authentication (i.e. regarding a first pair of communication endpoints) is able to be used to efficiently establish one or more secondary security contexts (i.e. regarding a second pair of communication endpoints and/or regarding even further pairs thereof).

Control plane (CP) signaling between the user equipment and the core network is based on the non-access stratum, NAS, protocol. Thus, NAS messages (i.e. non-access stratum messages) are control plane messages, i.e. providing control plane (CP) signaling between the user equipment and the core network (being primarily merely forwarded by the access network node or entity, i.e. the serving base station entity) and are based on the NAS (non-access stratum) protocol.

In conventionally known mobile communication networks, the access and mobility management function (AMF) typically terminates NAS security for all NAS messages of a user equipment and processes mobility management (MM); however, for other (network) functions, the access and mobility management function (AMF) forwards NAS payloads over service-based interface (SBI) to other network functions or services (NFs), such as: SMF for Session Management (SM), SMSF for SMS, PCF for policy, and GMLC for location (services). 5G-NAS is transported between the user equipment and the core network on top of next generation application layer protocol, NG-AP (i.e. NG-AP payloads can contain NAS containers).
SBI refers to service based interface which uses the service based architecture (SBA) 5GC control plane (CP) Architecture. Service based interfaces use a protocol stack based on HTTP/2 (instead of GTP-C). NAS containers other than mobility management (MM) are transported/forwarded from the AMF in SBI messages by including the NAS binary container as MIME multipart together with a JSON body.
Furthermore, temporary Identifiers are used in the core network for NAS communication: In order for the core network to be able to address a user equipment, temporary identifiers are used. The reason for temporary identifiers is to avoid that the radio access network is aware of any permanent identifier (i.e. for example SUPI/IMSI, cf. TS 23.003). An important characteristic of the temporary identifiers is that they combine (permanent) instance identifiers with temporary user equipment-associated identifiers. Hence, they provide core network topology information to the access network or radio access network.

NAS messages represent the N1 interface, which is between the user equipment and the core network (i.e. the network nodes thereof). Although in principle "transparent" to RAN, certain information is obviously necessary in order for the radio access network to be able to route the user equipment NAS messages towards the core network and vice versa.
NAS messages are sent within NG-AP messages. NG-AP is routed based on identifiers such as AMF-UE NGAP ID and RAN-UE NGAP ID. These identifiers are part of the NG-AP protocol. Further towards the user equipment, the NAS payloads are transported over the RRC protocol layer, which is in turn mapped to logical, and ultimately, physical channels over the air interface (between the user equipment and the respective (serving) gNB/base station entity/access network node or entity).
NAS payloads are transported over RRC by means of signalling radio bearers (SRBs); thus NAS payloads are sent by means of a RRC-Container and associated to a SRB ID. The is a "DedicatedNAS-Message" information element (IE) being used over RRC to transparently transport the NAS payload.
Hence, the NAS payload is not completely a "black box" (to the radio access network): A couple of parameters are visible to the radio access network, among them the (extended) protocol discriminator (EPD).
In this regard, as far as the radio access network is concerned, all encrypted (cyphered) NAS containers are marked as MM (even if a considered encrypted NAS message actually rather relates to session management (SM) functionality).
Furthermore, there is a message authentication code and a sequence number as part of NAS message.

Regarding NGAP messages, on the NGAP layer NGAP elementary procedures are specified. Each NGAP message indicates to what elementary procedure it is associated; equally, each procedure has a specified ASN.1 definition of the expected (e.g. mandatory, optional) parameters and their format. An elementary procedure is a unit of interaction between the NG-RAN node (i.e. the access network node or entity) and the corresponding core network - in conventional mobile communication networks solely the access and mobility management function (AMF). These elementary procedures are defined separately and are intended to be used to build up complete sequences in a flexible manner. If the independence between some elementary procedures is restricted, it is described under the relevant elementary procedure description. Unless otherwise stated by the restrictions, the elementary procedures may be invoked independently of each other as standalone procedures, which can be active in parallel. The usage of several NGAP elementary procedures together or together with elementary procedures from other interfaces is specified in stage 2 specifications (e.g., TS 38.401, TS 38.410 and TS 38.300). An elementary procedure consists of an initiating message and possibly a response message, wherein two kinds of elementary procedures are used: class 1 elementary procedures (being elementary procedures with response (success and/or failure)), and class 2 elementary procedures (being elementary procedures without response).
For class 1 elementary procedures, the types of responses can be as follows: "successful" (meaning that a signaling message explicitly indicates that the elementary procedure successfully completed with the receipt of the response), "unsuccessful" (meaning that a signaling message explicitly indicates that the elementary procedure failed), "on time supervision expiry" (i.e., absence of expected response), and "successful and unsuccessful" (meaning that one signaling message reports both successful and unsuccessful outcome for the different included requests. The response message used is the one defined for successful outcome).
Class 2 elementary procedures are considered always successful (cf. TS 38.413 regarding both classes of procedures).

NAS Security: non-access stratum messages are, with some exceptions, encrypted end-to-end between the respective user equipment and the core network (node or entity). That is, the access network (i.e. the radio access network) has generally no access to the contents of the NAS containers exchanged between the user equipment and the core network, cf clause 4.4 of TS 24.501. NAS security is based on an encryption key, in current implementations a 128-bit encryption key. While messages prior to the establishment of a NAS security context are exchanged in plain text (i.e. unencrypted), after the establishment of the NAS security context, NAS messages are exchanged encrypted.
Thus, NAS security is provided by NAS messages (or, at least, a (mayor) part thereof) being encrypted, especially using 128-bit encryption, cf. TS 33.501; thereby, the security anchor function SEAF provides the authentication functionality, typically via the access and mobility management function AMF in the serving network.

Modular NAS approach/paradigm: A disaggregation of the NAS communication from the access and mobility management function (AMF) functionality provides the possibility for an optimization: I.e. to replace the AMF's function as a single point of termination for the NAS protocol and NAS security context, such that the user equipment is capable of directly communicating with other core network elements. For that, a user equipment would need to establish multiple security contexts, among other issues.
The most important aspect of NAS disaggregation is linked to the real separation between the AMF and SMF functions, i.e. access and mobility (AM) and session management (SM). In conventionally known mobile networks, AM and SM are intertwined by virtue of the AMF being the NAS termination point.
A disaggregated or modular NAS implementation on network side would enable more flexible deployments such as to allow for different topologies for deployments: In currently known mobile communication networks, all control plane traffic necessarily needs to pass through the access and mobility management function AMF (thus, only deployment models such as "AMF as core network entry point (SCTP-based)" or as "geo-redundancy, e.g. multiple datacenters" are possible), and, as - regarding end to end security - currently, NAS security is hop-by-hop, the user equipment needs to implicitly trust that behind the access and mobility management function AMF the communication is secure. Using modular NAS, also the following deployment models are possible:
-- separated service ingress,
-- hybrid/distributed (e.g. central vs. campus),
-- direct addressing (e.g. virtual machines (VMs) without Kubernetes k8s).
Thus, NAS disaggregation allows to use both current deployment topologies as well as new ones where the dependency on the AMF is removed.

According to the present invention, it is advantageously possible and preferred that the non-access stratum route identifier information is
-- specific to the user equipment and the specific core network node or entity involved, and/or
-- specific to the non-access stratum messages - especially all non-access stratum messages during a certain time interval and/or a certain communication context - exchanged between the pair of communication endpoints of the considered communication between the user equipment and the specific core network node or entity involved,
wherein especially, by means of the assignment of the specific non-access stratum route identifier information to the user equipment and the specific core network node or entity, the access network node or entity or a NAS routing function of the core network realizes a 1:N mapping in uplink direction, and a N:1 mapping in downlink direction, the 1:N mapping especially being between, on the one hand, a radio resource control protocol layer of an air interface between the access network node or entity and the user equipment or an identifier associated to it, and, on the other hand, an N2 interface between the access network node or entity (or the NAS routing function) and the specific core network node or entity, and/or the N:1 mapping especially being between, on the one hand, an N2 interface between the access network node or entity and the specific core network node or entity, and, on the other hand, a radio resource control protocol layer of an air interface between the access network node or entity and the user equipment or an identifier associated to it.

It is thereby advantageously possible to comparatively easily and efficiently implement the use of non-access stratum route identifier information according to the present invention.

According to further embodiments of the present invention, it is possible and preferred that the non-access stratum route identifier information is part of non-access stratum messages, especially of all non-access stratum messages during a certain time interval and/or a certain communication context, between the user equipment and the specific core network node or entity, wherein especially the non-access stratum route identifier information is
-- introduced, in non-access stratum messages in downlink direction, by the specific core network node or entity, and
-- introduced, in non-access stratum messages in uplink direction, by the user equipment.

It is thereby advantageously possible, according to the present invention, that all the NAS messages of a specific flow of (uplink and/or downlink) NAS messages - at least during a certain time interval and/or regarding a certain communication context - comprise the respective non-access stratum route identifier information.

In a further embodiment of the present invention, it is possible and preferred that, regarding the transmission
-- on the one hand of non-access stratum messages between, as a first pair of communication endpoints, the user equipment and the core network node or entity, and
-- on the other hand of non-access stratum messages between, as a second pair of communication endpoints, the user equipment and a different further core network node or entity,
   different pieces of non-access stratum route identifier information are used, respectively, especially, besides the non-access stratum route identifier information relating to the first pair of communication endpoints, a further non-access stratum route identifier information relating to the second pair of communication endpoints,
   wherein especially the core network node or entity and the further core network node or entity correspond to two different network functions or services of the core network of the mobile communication network, especially an access and mobility management function, a session management function and/or a policy and charging function,
   wherein especially a different security context is established between the first pair of communication endpoints and the second pair of communication endpoints, respectively, wherein especially the security context between the second pair of communication endpoints:
-- is established - especially on request by the user equipment - using the security context between the first pair of communication endpoints, wherein especially the further non-access stratum route identifier information, relating to the second pair of communication endpoints, is generated and/or assigned based on at least one non-access stratum message transmitted between the first pair of communication endpoints, and/or
-- is established - especially network-initiated - by means of a non-access stratum security mode command sent by the further core network node or entity to the user equipment, which non-access stratum security mode command especially comprising a derivation anchor such as K_{AMF} or K_{SEAF}.

It is thereby advantageously possible to comparatively easily and efficiently implement the use of non-access stratum route identifier information according to the present invention.

Still furthermore, it is also possible and preferred, according to the present invention that using the pieces of non-access stratum route identifier information realizes a non-access stratum routing layer, especially a privacy-keeping non-access stratum routing layer and especially a non-access stratum routing layer that is orthogonal to other identifier spaces.

Likewise, it is possible and preferred, according to the present invention that, in a single radio resource control message between the user equipment and the access network node or entity, a plurality of non-access stratum messages are encapsulated, especially as part of a non-access stratum container, which non-access stratum messages relating to different security contexts and/or different pairs of communication endpoints.

Still furthermore, it is also possible and preferred, according to the present invention that the pieces of non-access stratum route identifier information are generated by a specific core network node or entity, especially an access and mobility management function, especially a core network node or entity responsible for processing registration requests.

Thereby, it is advantageously possible, to comparatively easily and efficiently implement the use of non-access stratum route identifier information according to the present invention.

Additionally, it is also possible and preferred, according to the present invention that a handover of the user equipment is realized between the access network node or entity and a further access network node or entity, wherein the handover comprises the transfer of the mapping in uplink direction and/or the mapping in downlink direction from the access network node or entity to the further access network node or entity, as well as a remapping of the transferred mapping information between the radio resource control protocol layer of the air interface between the access network node or entity and the user equipment and a radio resource control protocol layer of the air interface between the further access network node or entity and the user equipment.

Thereby, it is advantageously possible, according to the present invention, to comparatively easily and efficiently implement the use of non-access stratum route identifier information according to the present invention.

Still furthermore, it is also possible and preferred, according to the present invention that the specific core network node or entity or another core network node or entity instructs, especially repeatedly, the access network node or entity or the NAS routing function to map the specific non-access stratum route identifier information to an endpoint associated to the specific core network node or entity, especially SCTP-, QUIC-, HTTP- or SBA-based endpoint, especially represented by means of a IP address, FQDN, URI and/or information contained within a NF profile associated to the specific core network node or entity.

Still furthermore, it is also possible and preferred, according to the present invention that the specific core network node or entity or another core network node or entity instructs, especially repeatedly, a dedicated network node or entity, which then in turn communicates with the access network node or entity to map the specific non-access stratum route identifier information to an endpoint associated to the specific core network node or entity, especially SCTP-, QUIC-, HTTP- or SBA-based endpoint, especially represented by means of a IP address, FQDN, URI and/or information contained within a NF profile associated to the specific core network node or entity. In effect, placing the NAS routing function (or functionality) in the dedicated entity, especially placing the dedicated entity as part of the core network.

Furthermore, the present invention relates to a system or to a mobile communication network for transmitting non-access stratum messages between a user equipment and the mobile communication network, wherein the mobile communication network comprises at least one access network node or entity of an access network and a plurality of core network nodes or entities of a core network, wherein the communication between the user equipment and the plurality of core network nodes or entities involves the access network node or entity regarding the transmission of non-access stratum messages
-- in uplink direction from the user equipment to the plurality of core network nodes or entities as well as
-- in downlink direction from the plurality of core network nodes or entities to the user equipment,
wherein the system or mobile communication network is configured such that:
-- regarding non-access stratum messages between the user equipment and a specific core network node or entity of the plurality of core network nodes or entities, an assignment to a specific non-access stratum route identifier information is performed,
-- the non-access stratum messages between the user equipment and the specific core network node or entity are processed using the specific non-access stratum route identifier information.

Still furthermore, the present invention relates to a user equipment for transmitting non-access stratum messages between the user equipment and a mobile communication network, wherein the mobile communication network comprises at least one access network node or entity of an access network and a plurality of core network nodes or entities of a core network, wherein the communication between the user equipment and the plurality of core network nodes or entities involves the access network node or entity regarding the transmission of non-access stratum messages
-- in uplink direction from the user equipment to the plurality of core network nodes or entities as well as
-- in downlink direction from the plurality of core network nodes or entities to the user equipment,
wherein the user equipment is configured such that:
-- regarding non-access stratum messages between the user equipment and a specific core network node or entity of the plurality of core network nodes or entities, an assignment to a specific non-access stratum route identifier information is performed,
-- the non-access stratum messages between the user equipment and the specific core network node or entity are processed using the specific non-access stratum route identifier information.

Additionally, the present invention relates to a program comprising a computer readable program code, which, when executed on a computer and/or on a core network node or entity and/or on an access network node or entity, especially a base station entity, or in part on a core network node or entity and/or in part on an access network node or entity, especially a base station entity, causes the computer and/or the core network node or entity and/or the access network node or entity, especially the base station entity, to perform the inventive method.

Still additionally, the present invention relates to a Computer-readable medium comprising instructions which when executed on a computer and/or on a core network node or entity and/or on an access network node or entity, especially a base station entity, or in part on a core network node or entity and/or in part on an access network node or entity, especially a base station entity, causes the computer and/or the core network node or entity and/or the access network node or entity, especially the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

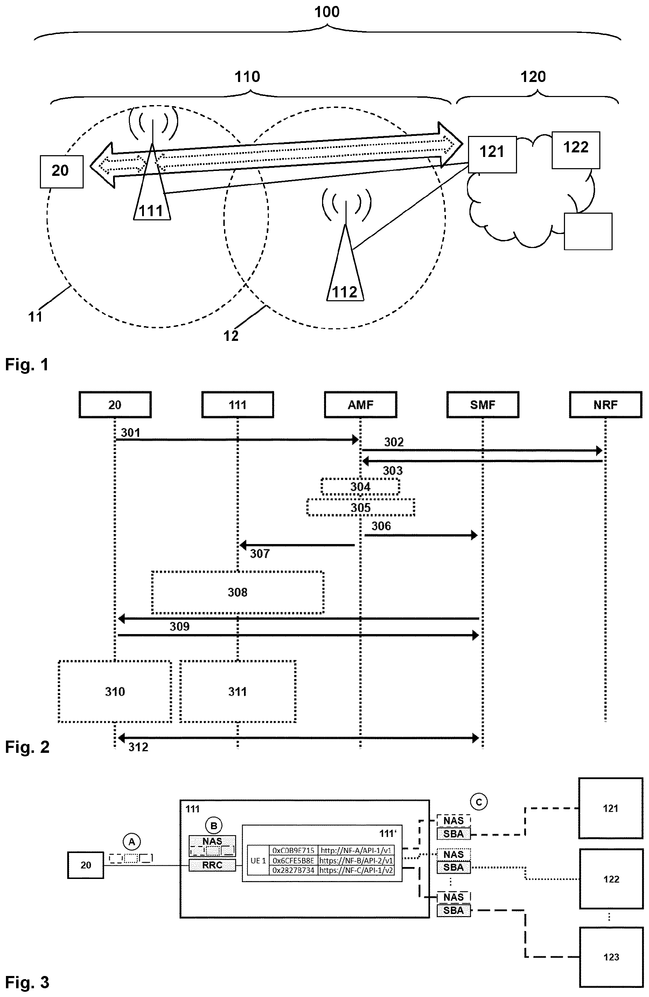

Figure 1 schematically illustrates the situation of a user equipment in a mobile communication network comprising a core network as well as a radio access network that has (at least) two base station entities (or access network nodes or entities), one of which is serving the user equipment, thus involving data being transmitted, both in uplink direction and in downlink direction, between the user equipment and the (serving) base station entity (or access network node or entity), as well as between the (serving) base station entity (or access network node or entity) and the core network, involving non-access stratum messages in uplink and downlink direction.
Figure 2 schematically and exemplarily illustrates how, according to the present invention, the use of the non-access stratum route identifier information (or non-access stratum routing identifier information) between a pair of communication endpoints (second pair of communication endpoints) is able to be initiated and its establishment (as well as that of a corresponding security context) implemented in practice between a user equipment and a further core network node or entity, starting from, or based on, an already established security context between another (first) pair of communication endpoints comprising the user equipment and a core network node or entity of the mobile communication network.
Figure 3 schematically and exemplarily illustrates an example of implementation of the disaggregated (or modular) paradigm of NAS transport, namely the transport of non-access stratum messages between different pairs of communication endpoints (each one comprising the user equipment).

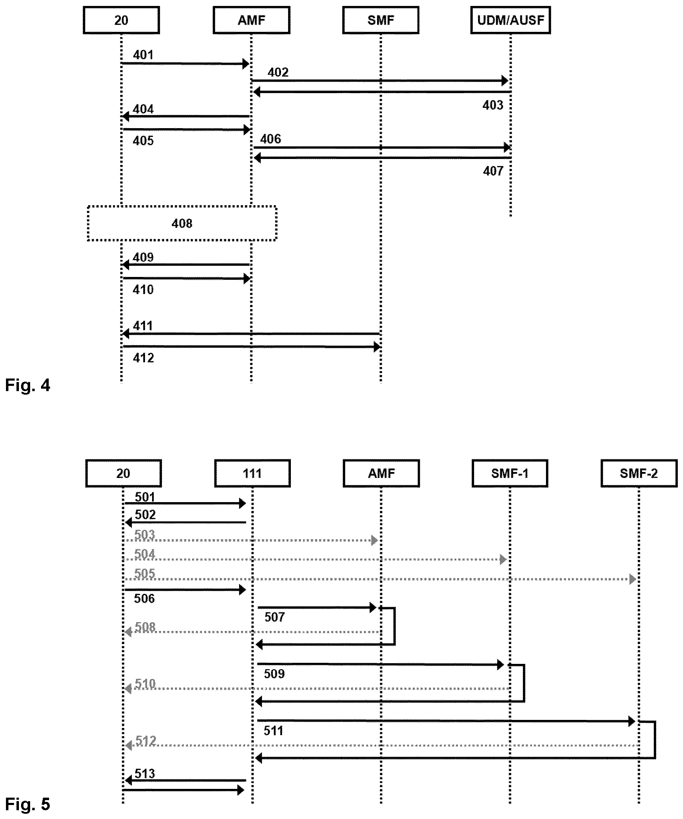

Figure 4 schematically and exemplarily illustrates how, according to the present invention, the use of the non-access stratum route identifier information (or non-access stratum routing identifier information) between a pair of communication endpoints (second pair of communication endpoints) is able to be initiated and its establishment (as well as that of a corresponding security context) implemented in practice between a user equipment and a further core network node or entity, resulting from its initiation by the further core network node or entity (i.e. independent from an already established security context between another (first) pair of communication endpoints comprising the user equipment and a core network node or entity of the mobile communication network), especially by means of a non-access stratum security mode command sent by the further core network node or entity to the user equipment.
Figure 5 schematically and exemplarily illustrates how, according to the present invention, the non-access stratum route identifier information is used in a situation where a user equipment triggers a service request.
Figure 6 schematically and exemplarily illustrates how, according to the present invention, the non-access stratum route identifier information is used in a situation where a user equipment triggers a protocol data unit session (PDU session) establishment.
Figure 7 schematically and exemplarily illustrates different examples and possibilities of routing implementations for NAS messages according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign in Figure 1 - only two network functions or services are indicated by means of reference signs 121 and 122 which are, hereinafter, also called core network node or entity 121 and further core network node or entity 122. The access network 110 or radio access network 110 typically comprises a plurality of radio cells 11, 12, i.e. geographical areas served, respectively, by base station entities. In the exemplary situation or scenario shown in Figure 1, a first base station entity 111 generates or is associated with or spans the first (terrestrial) radio cell 11, and a second base station entity 112 generates or is associated with or spans the second (terrestrial) radio cell 12 (the first and second (terrestrial) radio cells 11, 12 being represented, in Figure 1, by means of dashed circles around the first and second base station entity 111, 112, respectively). The first and second base station entity 111, 112 typically realize gNB functionality or 6G radio access network functionality. In the context of the present invention, such base station entities 111, 112 are also called, synonymously to the term base station entities, access network node(s) or entity/entities. The mobile communication network 100 is typically connected to a user equipment 20 (or, rather, the user equipment 20 is connected to the telecommunications network 100). In the exemplary situation represented in Figure 1, the user equipment 20 is schematically shown as being served by the first base station entity 111 - typically involving uplink data, being transmitted in uplink direction, and downlink data, being transmitted in downlink direction, both directions being represented, in Figure 1, by means of a double arrow shown by a drawn-through line between the user equipment 20 and (exemplarily) the core network node or entity 121, this (larger) double arrow comprising another double arrow (represented by means of a dotted line) between the user equipment 20 and the base station entity/access network node or entity 111 still another double arrow (likewise represented by means of a dotted line) between the base station entity/access network node or entity 111 and the core network node or entity 121. Such uplink and downlink data, obviously, need to be transmitted not only between the user equipment 20 and the base station entity/access network node or entity 111 but also between the serving base station entity/access network node or entity 111 and the core network (especially the exemplarily shown network function or service (or core network node or entity) 121 thereof).

According to the present invention, the user equipment 20 is part of, or connected to, the mobile communication network 100 (i.e. the user equipment 20 is part of a system comprising the mobile communication network 100 and the user equipment 20), and, thus, transmits or exchanges data (or traffic) with the mobile communication network 100. This, of course, includes data or traffic exchanged on the air interface between the user equipment 20 and the base station entity/access network node or entity 111 (this is typically called the Uu interface or reference point), but it also includes data or traffic - especially control plane data or traffic - exchanged (i.e. transmitted in uplink as well as in downlink direction) between the base station entity/access network node or entity 111 (that is serving the user equipment 20) and the core network 120 (especially a plurality of (specific) network functions or services 121, 122 that the core network 120 typically has or comprises); this is typically called the N2 interface or reference point (regarding communication between the radio access network and the core network) and also relates to the N1 interface or reference point (regarding communication between the user equipment 20 and the core network/network function or service 121, involving the base station entity/access network node or entity 111). Especially the N1 interface is involved for the transmission of non-access stratum messages, NAS messages.

In conventionally known mobile communication networks 100, as well as according to the present invention, a different protocol stack is typically realized, or used, for realizing the Uu interface or reference point on the one hand, and the N2/N1 interface or reference point on the other hand. Typically the N2/N1 reference stack involves a non-access stratum layer for transporting NAS messages as well as a next generation application layer protocol (NGAP) layer for transporting NGAP messages. Thus, according to the present invention, next generation application layer protocol messages, NGAP messages, and/or non-access stratum messages, NAS messages, are transmitted - at least between the base station entity/access network node or entity 111 and the core network node or entity 121 - using an underlying protocol below the next generation application layer protocol (NGAP)-Layer (but wherein, typically, the NAS messages are not terminated at the access network node or entity 111, but, rather, only forwarded). Thus, both these application layer messages (i.e. typically NGAP messages and/or NAS messages) are exchanged in uplink and downlink direction (and between the access network node or entity 111 and the core network node or entity 121) over the underlying protocol below the next generation application layer protocol (NGAP)-Layer.

In conventionally known mobile communication networks, typically an aggregated approach or paradigm regarding the transmission of non-access stratum messages is used, where one core network node or entity 121 (typically the access and mobility management function) is used as a single (or common) entry point for non-access stratum messages, especially also such non-access stratum messages being (ultimately) directed towards other network functions or services (such as the further core network node or entity 122) of the core network. According to such a conventional approach, typically the access and mobility management function AMF serves as the single point of termination for the non-access stratum protocol (or non-access stratum messages) as well as a non-access stratum security context; thus, conventionally, communication that is intended between a user equipment 20 and core network nodes or entities 122 other than, typically, the access and mobility management function AMF occur via the access and mobility management function AMF that is used as common entry point. Thus, while such communication is intended to be between the user equipment 20 and the (further) core network node or entity 122, it is nevertheless terminated by the access and mobility management function AMF due to the aggregated approach regarding NAS communication.

In contrast thereto, according to the present invention, a disaggregated NAS communication (or modular approach) is proposed for transmitting the non-access stratum messages (likewise between a user equipment 20 and a mobile communication network). As in conventionally known networks, the mobile communication network 100 comprises at least one access network node or entity 111 of an access network 110 and a plurality of core network nodes or entities 121, 122 of the core network 120. Again as in conventionally known networks, the communication between the user equipment 20 and the plurality of core network nodes or entities 121, 122 involves the access network node or entity 111 regarding the transmission of non-access stratum messages both in uplink direction (from the user equipment 20 to the plurality of core network nodes or entities 121, 122) as in downlink direction (from the plurality of core network nodes or entities 121, 122 to the user equipment 20).
In the context of such a disaggregated NAS communication approach, it is proposed, according to the present invention, to use - regarding a specific pair of communication endpoints, i.e. typically a specific user equipment 20 (of the, typically, plurality of user equipments that are connected to (or served by) a base station entity/access network node or entity 111) and a specific core network node or entity 121, 122 (of the plurality of core network nodes or entities (or network functions or services) of the core network 120) - a non-access stratum route identifier information that is specific to the considered pair of communication endpoints. According to the present invention, this typically involves (in a first step) to assign such specific non-access stratum route identifier information, and (in a second step) to process the non-access stratum messages (between the considered pair of communication endpoints, i.e. between the user equipment 20 and the specific core network node or entity 121) accordingly, i.e. using the specific non-access stratum route identifier information for routing purposes.
In the context of the present invention, the non-access stratum messages for the setup and/or management of such non-access stratum route identifier information are also referred to as routing management NAS messages - or RM-NAS messages.

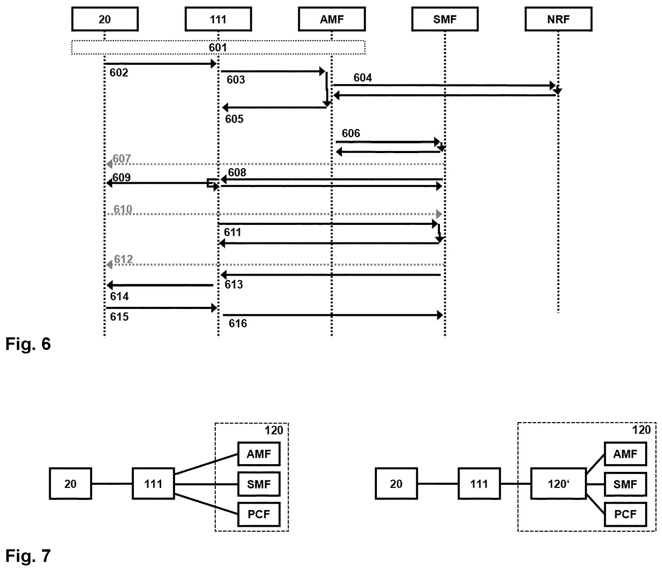

In Figure 2, the use of the non-access stratum route identifier information (or non-access stratum routing identifier information) between a pair of communication endpoints (second pair of communication endpoints) and how this use (as well as that of a corresponding security context) is able to be initiated and implemented in practice between a user equipment 20 and a further core network node or entity 122, starting from, or based on, an already established security context between another (first) pair of communication endpoints comprising the user equipment 20 and a core network node or entity 121 of the mobile communication network.
Thus, according to a preferred example or variant according to the present invention, the solution is based on the introduction of the non-access stratum route identifier information (i.e. a NAS routing element or NAS routing layer) to the NAS protocol, where a direct communication (as well as the corresponding security context) between the user equipment 20 and the further core network node or entity 122 is realized based on an already established other direct communication.
Figure 2 exemplarily shows this by means of representing the communication between the user equipment 20, the corresponding radio access network node (i.e. access network node or entity) 111 as well as a core network node or entity 121/AMF and a further core network node or entity 122/SMF.
In the context of the present invention, generally, - and not only with regard to Figure 2 but also with regard to the other figures, examples and embodiments of the present invention - an arbitrary (or first) core network node or entity is often referred to by means of reference sign 121 and a further (likewise arbitrary) core network node or entity is often referred to by means of reference sign 122; furthermore, such core network nodes or entities 121, 122 are, rather interchangeably, also referred to by their actual functionality, or its abbreviation thereof, in the context of the core network 120 of the mobile communication network 100, such as AMF, SMF (session management function), NRF (network repository function), UDM (unified data management (function)), AUSF (authentication server (function)).
Furthermore - and likewise not only with regard to Figure 2 but also with regard to the other figures, examples and embodiments of the present invention - using the NAS route identifier information (or NAS route ID) as an additional routing layer requires an entity or functionality that realizes that routing (and executes such a defined mapping), typically using a routing table or NAS routing table. In the context of the present invention, primarily such routing functionality is assumed to be located and conducted as part of the access network node or entity/gNB/base station entity 111 that serves the considered user equipment 20 (cf. Figures 3 and 7, especially the NAS routing table 111'); however, it is - alternatively to the gNB conducting this functionality - also possible that such NAS routing functionality is placed (at least for specific user equipments) at a separate entity as part of the core network, i.e. an entity or network node thereof, especially as part of, e.g., the access and mobility management function or another network function or service, cf. Figure 7 and especially NAS routing function 120'. Thus, in the latter case, for a given user equipment 20, in the uplink direction all NAS messages from the user equipment 20 are routed, by the access network node or entity or gNB 111, towards the NAS routing function 120', and in the downlink direction all NAS messages are forwarded by the NAS routing function 120' towards the access network node or entity or gNB 111. In a first processing step 301, the user equipment 20 transmits, e.g. for protocol data unit PDU session establishment purposes, using a key information K_{AMF}, especially as part of a routing management non-access stratum message, to the core network node or entity AMF. Hence, by means of a RM-NAS message, the user equipment 20 requests a NAS route ID for e.g. PDU session establishment; this, e.g., includes a network slice indication NSSAI and/or other parameters.
In a second processing step 302, the core network node or entity AMF performs session management function discovery at the network repository function NRF. In a third processing step 303, the network repository function NRF provides the session management function network function profile information. In a fourth processing step 304, the core network node or entity AMF performs session management function SMF selection. Hence, an NRF-based, core network-controlled discovery is performed upon the request by the user equipment 20, but the selection of the network function or service is performed by the core network 120; especially, the user equipment 20 does not need to be aware of the serving instance (i.e. the actual session management function SMF). In a fifth processing step 305 the core network node or entity AMF generates a non-access stratum route identifier information (i.e. a NAS route ID), and in a sixth processing step, it triggers the establishment of the NAS route with the further core network node or entity SMF, especially by means of providing a corresponding gNB information, a plain RM-NAS as well as the non-access stratum route identifier information (NAS route ID). Furthermore, in a seventh processing step 307, the core network node or entity AMF provides a NAS routing information for the RM-NAS request to the access network node or entity (or base station entity) 111, especially comprising the non-access stratum route identifier information (NAS route ID), and the further core network node or entity SMF, especially its endpoint information. This results, in an eighth processing step 308, in the access network node or entity 111 being able to associate the NAS route with the user equipment 20 (having initiated the NAS route request) and the SMF endpoint information (e.g. FQDN or NF profile information). Hence, the non-access stratum route is established by means of using the NAS route ID: the core network node or entity AMF sends the mapping between NAS route ID and the serving NF's SBI endpoint info (e.g. FQDN, NF profile), the access network node or entity/gNB 111 gets the serving NF's SBI endpoint info, and the serving NF (i.e. the further core network node or entity SMF) gets access network node or entity/gNB 111 SBI endpoint information.
In a ninth processing step 309, it is, thus, possible according to the present invention, that the further core network node or entity SMF initiates a security context with the user equipment 20 that is different from the security context between the user equipment 20 and the core network node or entity AMF. For this, a different key, K_{SMF}, is used.
In a tenth processing step, the user equipment 20 is only aware of the NAS route (ID), and the IP/topology information to access the further core network node or entity SMF is unknown to the user equipment 20. Likewise, in an eleventh processing step 311, the access network node or entity/gNB 111 does not need to know the purpose of the NAS route; it just performs the routing using the non-access stratum route identifier information, and such routing functionality is agnostic to the content as well as to the identity of the communication endpoint at the network side.
In a twelfth processing step 312, encrypted NAS communication is performed between the user equipment 20 and the further core network node or entity SMF based on (or using) K_{SMF}. Hence, the NAS messages include the NAS route ID with the user equipment 20 being agnostic to the IP/SBI protocol stack between access network node or entity/gNB 111 and the core network 120, and the radio access network being agnostic to the purpose of the NAS routing and the NAS content.

Thus, the solution according to the present invention is based on the following steps:
A user equipment 20 connected to the network (i.e., after a successful network registration, wherein the identity of the UE has been verified by the network and the UE has been granted access to the network, e.g. see general registration procedure in clause 4.2.2.2.2. of TS 23.502) requests via an established NAS interface a given service/functionality.
It is considered that the MM-NAS communication between the user equipment 20 and the access and mobility management function AMF to be reused as authorization is a step that should typically be performed (in case that MM would be split in authorization and mobility (e.g. AuthM-NAS and MM-NAS), it would probably be preferred that Auth-NAS is used).
In the exemplary representation of Figure 2, PDU session establishment is used as an example of a service request performed by the user equipment 20. In typical 5G implementations (i.e. applying the aggregated NAS paradigm), communication with the session management function SMF is done via the access and mobility management function AMF, while in modular NAS according to the present invention direct communication is supported; however, any other type of core network node or entity (or network function or service) - e.g. related to artificial intelligence/machine-learning model transfer or other functionality - could be requested by the user equipment 20.
According to the present invention, this request equates to the user equipment 20 requesting a NAS route ID for the given service/functionality.
This message is encrypted with K_{AMF}, such that only the access and mobility management function AMF can decrypt it.
The following parameters are considered to be included in the request:
-- type of service/feature being requested,
-- specific parameters for the service (e.g. QoS, redundancy),
-- (S-)NSSAI, i.e. an information regarding a requested network slice.
The access and mobility management function AMF (typically) is selecting a suitable network function or service (or further core network node or entity) to fulfill this request; it is considered that the access and mobility management function AMF uses the network repository function NRF to discover suitable candidates, and selects a suitable network function or service candidate.
Then the access and mobility management function AMF
-- generates a NAS route ID and
-- forwards the unencrypted service request to the selected network function or service, e.g. the session management function in the example of Figure 2 (the message being exchanged between the access and mobility management function AMF and the selected network function or service may itself be encrypted, e.g. using TLS.), wherein this message especially includes:
   -- information from the user equipment's request,
   -- information regarding how to reach the access network node or entity/gNB 111, e.g. IP address, FQDN, (excerpt of) network function profile,
   -- the NAS route ID; and
-- sends the access network node or entity/gNB 111 the NAS route ID and information how to reach the selected network function or service/further core network node or entity SMF, e.g. IP address, FQDN, URI (excerpt of) network function profile.
With the received information, the access network node or entity/gNB 111 is able to create and store an association that links the specific NAS route ID to the network function or service/further core network node or entity SMF endpoint, and with this information, the access network node or entity/gNB 111 is then capable of:
-- routing incoming (downlink) messages from the core network containing the NAS route ID to the corresponding user equipment 20 (i.e. providing for an N:1 mapping between NAS and RRC),
-- routing incoming (uplink) messages from the user equipment 20 containing the NAS route ID to the network function or service/further core network node or entity SMF endpoint (i.e. providing for an 1:N mapping between RRC and NAS),
-- furthermore, combining this information with information already available in current mobile communication networks, the access network node or entity/gNB can:
   -- combine the association with the user equipment's RRC identity (e.g. RNTI) such that no other user equipments can use this message route, and
   -- combine the association with AMF-UE NGAP ID and/or RAN UE NGAP ID such that no other network functions or services can use this message route unless they possess this information (e.g. via a context transfer procedure in case of failover).
      After a security context has been established (however, the solution is also applicable to unencrypted NAS communication), messages using the NAS routing ID can be exchanged between the user equipment 20 and the further core network node or entity/network function or service SMF via the access network, such that:
-- the user equipment 20 is only aware of the NAS route ID; IP addressing and/or network topology information are not known to the user equipment 20;
-- even a subsequent, further security context (e.g. after the user equipment 20 re-registers in the network) could use a different NAS route ID pointing to the same network function or service/further core network node or entity SMF without the user equipment 20 necessarily being aware of such a fact;
-- the access network node or entity/gNB 111 does not need to know the purpose of the NAS route (the NAS messages are encrypted and not accessible to the gNB); thus, the NAS routing functionality the gNB provides is agnostic to the NAS content and thus:
   -- new NAS functionality can be introduced without RAN impact,
   -- the NAS route identifier itself does not need to contain any information directly related with a specific instance (e.g. a S-TMSI contains an AMF identifier);
   -- radio access network complexity is kept at the necessary minimum.

Hence, according to the present invention, at the access network node or entity or gNB 111, a modular NAS route association is possible by means of using a NAS Route mapping Information that is stored at the access network node or entity or gNB per NAS security context (or per non-access stratum route identifier information), and the NAS route ID management can be seen as implementing a generic "NAS routing layer":
-- managed via common NAS and an appropriate starting point such as MM-NAS (i.e. AMF) as authentication part (such a part is anyway always needed),
-- the core network provides the NAS route ID and associated target network function or service endpoint information to the gNB 111 (e.g. SMF's SBI FQDN/URL),
-- the gNB 111 associates the NAS route ID and the network function or service endpoint information to the user equipment's RRC-layer identitity (e.g. RNTI),
-- the unique NAS route ID (e.g. 0xe7fc7b50) is to be included in all corresponding NAS messages;
-- a user equipment-associated identifier information is not strictly necessary, but can be taken into account to avoid identity clashes and make the mapping more robust (e.g. RNTI, AMF-UE NGAP ID).
Thus, according to the present invention, a mapping between one RRC association and multiple NAS associations provides the gNB with NAS routing capabilities, such that a NAS uplink message can be routed to one of N network functions or services (uplink 1:N mapping) and that a NAS downlink message received from a given network function or service can be mapped to a user equipment over RRC (downlink N:1 mapping).
It is to be understood, according to the present invention, that while the present description primarily focuses on a single RRC-level user equipment identity, multiple RRC-level identities for a single user equipment are possible and preferred and can be equally supported; such a situation could arise in the case of new approaches for the RRC protocol stack/layer for 6G or future mobile generations.

According to the present invention, it is especially advantageous to provide for a privacy-focused approach: It is proposed that the NAS route ID is a generic identifier not including the identity of the core network endpoint such as by a randomized identifier (e.g. 0xC0B9E715). The reason being that:
-- requiring the access network nodes to do discovery and selection would require that each and every single access network node would need to have the same implementation logic for this, which would prove complex to realize in practice;
-- routing can be designed as application-agnostic;
-- adding/changing functionality running on top of the NAS routing solution need not impact the NAS routing functionality itself;
Furthermore, the advantages of having the core network perform the network function or service discovery and selection are as follows:
-- the core network has much more information available, such as subscriber-related information;
-- making such information available to the access network has security implications and may require regulatory changes (an example of such implications is that in some countries, e.g. in Germany, the RAN has a different security classification as the core network exactly for this reason; since the radio access network does not have access to subscriber-related information, it can be classified as less security-critical) and/or a security reclassification of the radio access network.
It is thus desirable and advantageous that the radio access network has no topology information regarding the internal structure of the core network.According to the present invention, it is further possible to realize a combination of (S-)TMSI and NAS route ID. In currently known mobile communication networks the use of temporary user identifiers is considered at NAS layer, such as, e.g., the (S-)TMSI (e.g. 5G-S-TMSI, 5G-GUTI in the 5G system).
As these identifiers have a known structure, network identifiers such as an AMF pointer can be extracted from them. Therefore, it is purposedly proposed, according to the present invention, that the NAS route ID has a format that allows for privacy to be kept. Hence, while it is not precluded that existing temporary identifiers might be used within an implementation of NAS communication (e.g. with the advantage of being able to keep the existing MM-NAS procedures without or only with applying minimal changes), the use of the NAS route ID according to the present invention is advantageously possible to be designed as a privacy-keeping, orthogonal layer to the current identifier space.
Hence, the solution proposed does not require that TMSIs (or equivalent identifiers) are exposed to the radio access network (and neither that communication endpoint information regarding the involved core network nodes or entities need to be exposed to the user equipment); doing so would represent a security degradation of the system - thus, these entities (both the user equipment and the gNB/access network node or entity involved) do not need to be aware (via whatever identifier information) of the precise instances serving a considered user equipment.
Additionally, a more flexible, dynamic deployment of the non-access stratum route identifier information is additionally related to a much bigger addressing space. Exposing the radio access network to this complexity would result in the gNBs (or a dedicated NAS routing functionality) having to manage this additional complexity (e.g. being aware of different network function or service set IDs, network function regions, etc. contained within pseudo-GUTI / pseudo-S-TMSI identifiers without any real benefit compared to the proposed agnostic approach.

According to the present invention, support for multiple NAS messages on a single RRC message is provided:
When executing procedures such a service request, when the user equipment 20 switches from idle mode to connected mode, it is possible that a core network node or entity AMF and multiple further core network nodes or entities SMFs need to be simultaneously contacted. This is because not only the mobility management function needs to be notified, but also several (potentially all) PDU sessions need to be (re-)activated by their respective SMFs.
When using modular NAS, this translates into the user equipment 20 simultaneously needing to send multiple NAS messages to different network functions or services. That is, via different NAS routes. In order to efficiently support such procedures, according to the present invention, it is provided for a means to encapsulate multiple NAS messages in a single RRC message (on its own encrypted with K_{RRC}).
This is schematically shown in Figure 3 which schematically and exemplarily illustrates an example of implementation of the disaggregated (or modular) paradigm of NAS transport, namely the transport of non-access stratum messages between different pairs of communication endpoints (each one comprising the user equipment). Figure 3 shows three different non-access stratum messages (shown as dashed, dotted, and long-dashed rectangles, cf. reference sign A) that are transported (e.g. in uplink direction), from the user equipment 20 towards the access network node or entity/base station entity 111 as part of one single RRC message (reference sign B). At the access network node or entity/base station entity 111 a NAS routing table 111' assigns (or associates) the user equipment 20, the NAS route ID as well as the core network node or entity endpoint information to one another, e.g. NAS route ID "0xC0B9E715" is associated to a first pair of communication endpoints consisting of the user equipment 20 and the (first) core network node or entity 121 (having http://NF-A/API-1/v1 as endpoint address), NAS route ID "0x6CFE5B8E" is associated to a second pair of communication endpoints consisting of the user equipment 20 and the further (second) core network node or entity 122 (having https://NF-B/API-2/v1 as endpoint address), and NAS route ID "0x2827B734" is associated to a third pair of communication endpoints consisting of the user equipment 20 and still a further (third) core network node or entity 123 (having https://NF-C/API-1/v2 as endpoint address). The respective routes of the different NAS messages are also indicated by means of dashed, dotted, and long-dashed lines.
Thus, the user equipment 20 sends a RRC message containing multiple NAS messages.
In order to allow for backwards compatibility and avoid changes on the RRC layer, the current DedicatedNAS-Message RRC message is used. The RRC message is used to transport a NAS container which in turn contains multiple pairs of NAS message/NAS route ID. This nested NAS construct is transparent to the RRC layer.
The nested NAS container is only processed as such once it is passed to the NAS layer, which can then route the contained NAS messages based on the NAS routing table 111'. Thus, the amount of RRC messages is not increased due to modular NAS being used. While Figure 3 shows the multiple NAS containers in the uplink direction, the same could be applied to the downlink direction.
Additionally, responses related to the multiple NAS containers are able to be sent in a single RRC message towards the user equipment 20 (e.g. 3x security mode command messages).

In Figure 4, it is illustrated how, according to the present invention, the use of the non-access stratum route identifier information (or non-access stratum routing identifier information) between a pair of communication endpoints (second pair of communication endpoints) is able to be initiated and its establishment (as well as that of a corresponding security context - or secondary security context) implemented in practice between a user equipment 20 and a further core network node or entity 122/SMF, resulting from its initiation by the further core network node or entity 122/SMF (i.e. independent from an already established security context (primary security context) between another (first) pair of communication endpoints comprising the user equipment 20 and a core network node or entity 121/AMF of the mobile communication network 100).
According to the present invention, this is especially possible to be performed by means of a non-access stratum security mode command sent by the further core network node or entity 122/SMF to the user equipment 20.
Figure 4 exemplarily shows this by means of representing the communication between the user equipment 20, the corresponding core network node or entity 121/AMF, a further core network node or entity 122/SMF as well as a unified data management/authentication server function UDM/AUSF of the core network 120.
In a first processing step 401, the user equipment 20 transmits a NAS registration request to the core network node or entity AMF.
In a second processing step 402, the core network node or entity AMF transmits a Nudm_UEAuthentication Authenticate Request(SUCI) message to the unified data management/authentication server function UDM/AUSF.
In a third processing step 403, the unified data management/authentication server function UDM/AUSF transmits a Nudm_UEAuthentication Authenticate Response(5G SE AV (RAND, AUTN, HXRES*)) message to the core network node or entity AMF.
In a fourth processing step 404, the core network node or entity AMF transmits a NAS Auth. Request(RAND, AUTN) message to the user equipment 20.
In a fifth processing step 405, the user equipment 20 transmits a NAS Auth. Response(RES*) message to the core network node or entity AMF.
In a sixth processing step 406, the core network node or entity AMF transmits a Nausf_UEAuthentication_Authenticate Request(RES*) message to the unified data management/authentication server function UDM/AUSF. In a seventh processing step 407, the unified data management/authentication server function UDM/AUSF transmits a Nausf_UEAuthentication_Authenticate Response(SUPI, K_{SEAF})) message to the core network node or entity AMF.
The first to seventh processing steps advantageously provide for a reuse of 5G-AKA authentication (authentication and key agreement) for subsequent NAS security contexts: By basing K_{SMF} on K_{AMF} or K_{SEAF}, it is possible to reuse the initial primary authentication and avoid a full re-authentication for (e.g.) each new PDU session establishment.
In an eighth processing step 408, a new K_{AMF} calculation is able to be performed for the situation after a (new) NAS security mode command; this is exemplarily shown, in Figure 4, regarding both the core network node or entity AMF (sending a NAS security mode command, cf. a nineth processing step 409) and regarding the further core network node or entity SMF (sending also a NAS security mode command, cf. an eleventh processing step 411):
In the nineth processing step 409, the core network node or entity AMF transmits a NAS security mode command, and in a tenth processing step 410, the user equipment 20 transmits a NAS security mode complete message, thereby establishing a NAS security context with the core network node or entity AMF (this is also called the NAS primary security context).
Likewise, in the eleventh processing step 411, the further core network node or entity SMF transmits a NAS security mode command, and in a twelfth processing step 412, the user equipment 20 transmits a NAS security mode complete message, thereby establishing an (additional) NAS security context with the further core network node or entity SMF (this is also called the secondary NAS security context; however and contrary to what the term secondary NAS security context might hint at, such a NAS security context is able to be established independently from the primary NAS security context). Thus, the generation of the new NAS security context only requires the successful user equipment 20 primary authentication as basic premise for additional NAS security contexts. Creation of new security contexts does not require many additional messages. Hence, the present invention provides for key derivation such as to provide the possibility to establish NAS security contexts between the user equipment 20 and a plurality of core network nodes or entities 121/AMF, 122/SMF: An important aspect of the solution according to the present invention is the efficiency that can be achieved for the establishment of multiple security contexts: It is proposed that the primary authentication the user equipment 20 performs for network registration is reused, such that it need not be repeated (as shown in Figure 4).
Hence, after primary authentication, K_{SEAF} is available at the AMF, from which K_{AMF} is derived. According to 5G (current) specification, K_{SEAF} is required to be deleted after K_{AMF} is derived. However, according to the present invention, it is proposed that K_{SEAF} is kept for further use.
In order for the further core network node or entity SMF to be able to perform a NAS security mode command to initiate a security context, it must be possible for both the user equipment 20 and the further core network node or entity SMF to derive K_{SMF} based on the available information. If K_{AMF} or K_{SEAF} is used as derivation anchor, the further core network node or entity SMF can include information in the NAS security mode command such that the user equipment 20 can derive K_{SMF}.

Thus, according to the present invention, it is thereby (i.e. by means, especially, of the mechanism shown in Figure 4) advantageously possible that a network function or service (i.e. a core network node or entity such as the further core network node or entity SMF) - with which there was no previous direct contact (e.g. no NAS registration request sent towards it, by the user equipment 20) - initiates a NAS security command towards the user equipment 20, i.e. this results in a network-initiated NAS security context establishment from a "new" network function or service.

Figure 5 schematically and exemplarily illustrates how, according to the present invention, the non-access stratum route identifier information is used in a situation where a user equipment triggers a service request.
Such service requests are required, e.g., in case that the user equipment 20 in CM-IDLE state initiates a service request procedure to send uplink signaling messages, user data, to request emergency services fallback, or as a response to a network paging request. Such a service request procedure is also used by a user equipment 20 in CM-CONNECTED state to request activation of a user plane connection for PDU sessions and to respond to a NAS notification message from the AMF, cf. e.g. clause 4.2.3.2 of TS 23.502.
Figure 5 exemplarily shows this by means of representing the communication between the user equipment 20, the access network node or entity 111, the corresponding core network node or entity AMF, a further core network node or entity SMF-1 as well as another further core network node or entity SMF-2.
In a first processing step 501, the user equipment 20 transmits a RRC setup request to the access network node or entity 111.
In a second processing step 502, the access network node or entity 111 transmits an RRC setup message to the user equipment 20.
In a third processing step 503, the user equipment 20 transmits an initial MM-NAS (NAS route ID1, MM-NAS) message to the core network node or entity AMF.
In a fourth processing step 504, the user equipment 20 transmits an initial SM-NAS (NAS route ID2, SM-NAS) message to the further core network node or entity SMF-1.
In a fifth processing step 505, the user equipment 20 transmits an initial SM-NAS (NAS route ID3, SM-NAS) message to the other further core network node or entity SMF-2.
In a sixth processing step 506, the user equipment 20 transmits an RRC setup complete message to the core network node or entity AMF (comprising three NAS messages).
In a seventh processing step 507, the access network node or entity 111 transmits an NGAP initial user equipment (Initial MM-NAS msg, MM-S-TMSI) message to the core network node or entity AMF, and, in an eighth processing step 508, the core network node or entity AMF transmits a MM-NAS service request accept message to the user equipment 20.
In a nineth processing step 509, the access network node or entity 111 transmits an NGAP initial user equipment (Initial SM-NAS msg, SM-S-TMSI-1) message to the further core network node or entity SMF-1, and, in a tenth processing step 510, the further core network node or entity SMF-1 transmits an SM-NAS service request accept message to the user equipment 20.
In an eleventh processing step 511, the access network node or entity 111 transmits an NGAP Initial user equipment (Initial SM-NAS msg, SM-S-TMSI-2) message to the other further core network node or entity SMF-2, and, in a twelfth processing step 512, the other further core network node or entity SMF-2 transmits an SM-NAS service request accept message to the user equipment 20.
In a thirteenth processing step 513, the access network node or entity 111 transmits, to the user equipment 20, a RRC security mode command (comprising three NAS messages).
Thus, the message flow depicts how, by means of multiple NAS messages on a single RRC message, it is possible to efficiently realize a service request over the air interface.

Figure 6 schematically and exemplarily illustrates how, according to the present invention, the non-access stratum route identifier information is used in a situation where a user equipment triggers a protocol data unit session (PDU session) establishment.
Figure 6 exemplarily shows this by means of representing the communication between the user equipment 20, the access network node or entity 111, the corresponding core network node or entity AMF, a further core network node or entity SMF as well as a network repository function NRF.
In a first processing step 601, the user equipment 20 is registered at the core network node or entity AMF (5G-GUTI).
In a second processing step 602, the user equipment 20 transmits a RRC UL info Transfer(SM-NAS) message to the access network node or entity 111.
In a third processing step 603, the access network node or entity 111 transmits an NGAP N2 UL Transfer(SM-NAS) message to the core network node or entity AMF.
In a fourth processing step 604, the core network node or entity AMF transmits a Nnrf Discovery (SMF) message to the network repository function NRF, which is answered by the network repository function NRF.
In a fifth processing step 605, the core network node or entity AMF transmits a NGAP N2 DL Transfer(NAS routing info, SMF info) message to the access network node or entity 111.
The first to fifth processing steps correspond to an SMF request by the user equipment 20: The user equipment 29 provides the core network node or entity AMF with a request for SM-NAS functionality, a SMF discovery and selection takes place (i.e. the AMF is responsible for SMF discovery and selection with the network repository function NRF), and NAS routing is provided, by the core network node or entity AMF, to the access network node or entity/gNB 111, i.e. NAS routing info; the access network node or entity/gNB 111 does not need to know for what it is.
In a sixth processing step 606, this info is forwarded to the further core network node or entity SMF: AMF provides the user equipment request to the further core network node or entity SMF, as well as the gNB endpoint info.
In a seventh processing step 607, the further core network node or entity SMF transmits a DL NAS (SM NAS security mode command) message to the user equipment 20, by means of, in an eighth processing step 608, a NGAP N2 DL Transfer(SM-NAS) message transmitted by the further core network node or entity SMF to the access network node or entity 111, and, in a nineth processing step 609, a RRC DL Info Transfer(SM-NAS) message from the access network node or entity 111 to the user equipment 20. Thereby (i.e. by the seventh to nineth processing steps, and also by a tenth processing step) a security context is initiated between the user equipment 20 and the further core network node or entity SMF: SMF initiates NAS security context; the access network node or entity/gNB routes SM-NAS messages.
In a tenth processing step 610, the user equipment 20 transmits, to the further core network node or entity SMF, an UL NAS (NAS Security mode complete, PDU Session Establishment Request) message by means of, in an eleventh processing step 611, a NGAP N2 UL Transfer(SM-NAS) message transmitted by the access network node or entity 111 to the further core network node or entity SMF.
In a twelfth processing step 612, the further core network node or entity SMF transmits a DL NAS (PDU Session Establishment Accept) message by means of,
-- in a thirteenth processing step 613, the further core network node or entity SMF transmitting, to the access network node or entity 111, an N2 PDU Session Req. (SM-NAS) message,
-- in a fourteenth processing step 614, the access network node or entity 111 transmitting, to the user equipment 20, an RRC Reconfig Req.(SM-NAS) message,
-- in a fifteenth processing step 615, the user equipment 20 transmitting, to the access network node or entity 111, an RRC Reconfig Resp. (SM-NAS) message, and
-- in a sixteenth processing step 616, the access network node or entity 111 transmitting, to the further core network node or entity SMF, an N2 PDU Session
Response (SM-NAS).
Thereby (i.e. by the tenth to sixteenth processing steps) a PDU session establishment is performed; the PDU session establishment itself corresponds to the currently known procedures (as in 5G) but the routing of SM-NAS messages is modified: the user equipment 20 and the further core network node or entity SMF can exchange NAS messages via their own security context according to the present invention, and the access network node or entity/gNB routes these messages using the non-access stratum route identifier information.
Thus, when using modular NAS, the PDU session establishment request requires the user equipment 20 to request a NAS route and a new NAS security context to be established between user equipment 20 and the further core network node or entity SMF.

According to the present invention, it is preferred that the routing of NAS messages is performed by the access network node or entity 111 (that serves a user equipment 20). However, alternatively according to the present invention, a core network-based realization of such routing is also possible and also preferred. This is schematically represented in Figure 7, exemplarily showing the routing of NAS messages by the access network node or entity 111 (left hand side of Figure 7) and the routing of NAS messages by the core network (right hand side of Figure 7).
Hence, it is also possible to realize the NAS routing functionality as part of the core network instead of as part of the radio access network (i.e. as part of the gNB/access network node or entity 111). The NAS routing functionality as part of the core network 120 is schematically represented in Figure 7 on the right, exemplarily showing the routing of NAS messages by the core network, using a core network's NAS routing function 120' to route the multiple security contexts.
The only difference between both realizations is the location where the mapping is stored. That is, whether the NAS routing element (i.e. the functional element that performs the NAS routing - i.e. the mapping between the non-access stratum route identifier information and the address information of the respective communication endpoints, cf. the NAS routing table 111' shown in Figure 3) is part of the access network (radio access network), e.g. the gNB/access network node or entity/base station entity 111 or a core network-element 120' (e.g. a dedicated network function or service or part of another network function or service of the core network 120).
However, (even though a "RAN-impact" is caused by such a solution) it is preferred according to the present invention to realize the routing NAS functionality as part of the access network 110, because to define it as part of the core network 120 would increases the number of interfaces that need to be defined and maintained, thus adding further complexity. Additionally, the topological gain is lost, and such a 3GPP-aware-proxy architecture may further complicate cloud-based deployments (or would, at least, not reduce its complexity).

## Claims

1. Method for transmitting non-access stratum messages between a user equipment (20) and a mobile communication network (100), wherein the mobile communication network (100) comprises at least one access network node or entity (111) of an access network (110) and a plurality of core network nodes or entities (121, 122) of a core network (120),
wherein the communication between the user equipment (20) and the plurality of core network nodes or entities (121, 122) involves the access network node or entity (111) regarding the transmission of non-access stratum messages
-- in uplink direction from the user equipment (20) to the plurality of core network nodes or entities (121, 122) as well as
-- in downlink direction from the plurality of core network nodes or entities (121, 122) to the user equipment (20),
wherein the method comprises the following steps:
-- in a first step, regarding non-access stratum messages between the user equipment (20) and a specific core network node or entity (121) of the plurality of core network nodes or entities (121, 122), an assignment to a specific non-access stratum route identifier information is performed,
-- in a second step, the non-access stratum messages between the user equipment (20) and the specific core network node or entity (121) are processed using the specific non-access stratum route identifier information.

2. Method according to claim 1, wherein the non-access stratum route identifier information is
-- specific to the user equipment (20) and the specific core network node or entity (121) involved, and/or
-- specific to the non-access stratum messages - especially all non-access stratum messages during a certain time interval and/or a certain communication context - exchanged between the pair of communication endpoints of the considered communication between the user equipment (20) and the specific core network node or entity (121) involved,
wherein especially, by means of the assignment of the specific non-access stratum route identifier information to the user equipment (20) and the specific core network node or entity (121), the access network node or entity (111) or a NAS routing function (120') of the core network (120) realizes a 1:N mapping in uplink direction, and a N:1 mapping in downlink direction,
the 1:N mapping especially being between, on the one hand, a radio resource control protocol layer of an air interface between the access network node or entity (111) and the user equipment (20) or an identifier associated to it, and, on the other hand, an N2 interface between the access network node or entity (111) or the NAS routing function (120') and the specific core network node or entity (121), and/or
the N:1 mapping especially being between, on the one hand, an N2 interface between the access network node or entity (111) and the specific core network node or entity (121), and, on the other hand, a radio resource control protocol layer of an air interface between the access network node or entity (111) and the user equipment (20) or an identifier associated to it.

3. Method according to one of the preceding claims, wherein the non-access stratum route identifier information is part of non-access stratum messages, especially of all non-access stratum messages during a certain time interval and/or a certain communication context, between the user equipment (20) and the specific core network node or entity (121), wherein especially the non-access stratum route identifier information is
-- introduced, in non-access stratum messages in downlink direction, by the specific core network node or entity (121), and
-- introduced, in non-access stratum messages in uplink direction, by the user equipment (20).

4. Method according to one of the preceding claims, wherein, regarding the transmission
-- on the one hand of non-access stratum messages between, as a first pair of communication endpoints, the user equipment (20) and the core network node or entity (121), and
-- on the other hand of non-access stratum messages between, as a second pair of communication endpoints, the user equipment (20) and a different further core network node or entity (122),
different pieces of non-access stratum route identifier information are used, respectively, especially, besides the non-access stratum route identifier information relating to the first pair of communication endpoints, a further non-access stratum route identifier information relating to the second pair of communication endpoints,
wherein especially the core network node or entity (121) and the further core network node or entity (122) correspond to two different network functions or services of the core network (120) of the mobile communication network (100), especially an access and mobility management function, a session management function and/or a policy and charging function,
wherein especially a different security context is established between the first pair of communication endpoints and the second pair of communication endpoints, respectively,
wherein especially the security context between the second pair of communication endpoints:
-- is established - especially on request by the user equipment (20) - using the security context between the first pair of communication endpoints, wherein especially the further non-access stratum route identifier information, relating to the second pair of communication endpoints, is generated and/or assigned based on at least one non-access stratum message transmitted between the first pair of communication endpoints, and/or
-- is established - especially network-initiated - by means of a non-access stratum security mode command sent by the further core network node or entity (122) to the user equipment (20), which non-access stratum security mode command especially comprising a derivation anchor such as K_{AMF} or K_{SEAF}.

5. Method according to one of the preceding claims, wherein using the pieces of non-access stratum route identifier information realizes a non-access stratum routing layer, especially a privacy-keeping non-access stratum routing layer and especially a non-access stratum routing layer that is orthogonal to other identifier spaces.

6. Method according to one of the preceding claims, wherein, in a single radio resource control message between the user equipment (20) and the access network node or entity (111), a plurality of non-access stratum messages are encapsulated, especially as part of a non-access stratum container, which non-access stratum messages relating to different security contexts and/or different pairs of communication endpoints.

7. Method according to one of the preceding claims, wherein the pieces of non-access stratum route identifier information are generated by a specific core network node or entity, especially an access and mobility management function, especially a core network node or entity responsible for processing registration requests.

8. Method according to one of the preceding claims, wherein a handover of the user equipment (20) is realized between the access network node or entity (111) and a further access network node or entity (112), wherein the handover comprises the transfer of the mapping in uplink direction and/or the mapping in downlink direction from the access network node or entity (111) to the further access network node or entity (112), as well as a remapping of the transferred mapping information between the radio resource control protocol layer of the air interface between the access network node or entity (111) and the user equipment (20) and a radio resource control protocol layer of the air interface between the further access network node or entity (112) and the user equipment (20).

9. Method according to one of the preceding claims, wherein the specific core network node or entity (121) or another core network node or entity (122) instructs, especially repeatedly, the access network node or entity (111) or the NAS routing function (120') to map the specific non-access stratum route identifier information to an endpoint associated to the specific core network node or entity (121), especially SCTP-, QUIC-, HTTP- or SBA-based endpoint, especially represented by means of a IP address, FQDN, URI and/or information contained within a NF profile associated to the specific core network node or entity (121).

10. System or mobile communication network (100) for transmitting non-access stratum messages between a user equipment (20) and the mobile communication network (100), wherein the mobile communication network (100) comprises at least one access network node or entity (111) of an access network (110) and a plurality of core network nodes or entities (121, 122) of a core network (120), wherein the communication between the user equipment (20) and the plurality of core network nodes or entities (121, 122) involves the access network node or entity (111) regarding the transmission of non-access stratum messages
-- in uplink direction from the user equipment (20) to the plurality of core network nodes or entities (121, 122) as well as
-- in downlink direction from the plurality of core network nodes or entities (121, 122) to the user equipment (20),
wherein the system or mobile communication network (100) is configured such that:
-- regarding non-access stratum messages between the user equipment (20) and a specific core network node or entity (121) of the plurality of core network nodes or entities (121, 122), an assignment to a specific non-access stratum route identifier information is performed,
-- the non-access stratum messages between the user equipment (20) and the specific core network node or entity (121) are processed using the specific non-access stratum route identifier information.

11. User equipment (20) for transmitting non-access stratum messages between the user equipment (20) and a mobile communication network (100), wherein the mobile communication network (100) comprises at least one access network node or entity (111) of an access network (110) and a plurality of core network nodes or entities (121, 122) of a core network (120),
wherein the communication between the user equipment (20) and the plurality of core network nodes or entities (121, 122) involves the access network node or entity (111) regarding the transmission of non-access stratum messages
-- in uplink direction from the user equipment (20) to the plurality of core network nodes or entities (121, 122) as well as
-- in downlink direction from the plurality of core network nodes or entities (121, 122) to the user equipment (20),
wherein the user equipment (20) is configured such that:
-- regarding non-access stratum messages between the user equipment (20) and a specific core network node or entity (121) of the plurality of core network nodes or entities (121, 122), an assignment to a specific non-access stratum route identifier information is performed,
-- the non-access stratum messages between the user equipment (20) and the specific core network node or entity (121) are processed using the specific non-access stratum route identifier information.

12. Program comprising a computer readable program code, which, when executed on a computer and/or on a core network node or entity (121, 122) and/or on an access network node or entity (111), especially a base station entity (111), or in part on a core network node or entity (121, 122) and/or in part on an access network node or entity (111), especially a base station entity (111), causes the computer and/or the core network node or entity (121, 122) and/or the access network node or entity (111), especially the base station entity (111), to perform a method according to one of claims 1 to 11.

13. Computer-readable medium comprising instructions which when executed on a computer and/or on a core network node or entity (121, 122) and/or on an access network node or entity (111), especially a base station entity (111), or in part on a core network node or entity (121, 122) and/or in part on an access network node or entity (111), especially a base station entity (111), causes the computer and/or the core network node or entity (121, 122) and/or the access network node or entity (111), especially the base station entity (111), to perform a method according to one of claims 1 to 11.
